# EUROPEAN PATENT SPECIFICATION

(11) **EP 0 388 983 B1**
(45) Date of publication and mention of the grant of the patent: **05.01.1994**
(21) Application number: 90105587.1
(22) Date of filing: 23.03.1990
(51) Int. Cl.: B60Q 1/04

(54) **Aimable beam headlamp**
Scheinwerfer mit einstellbarem Lichtstrahlwinkel
Phare à faisceau ajustable

(30) Priority: 24.03.1989 IT 6721189
(43) Date of publication of application: 26.09.1990
(73) Proprietor: CARELLO S.p.A., I-10135 Torino (IT)
(72) Inventor: Toso, Roberto, I-10040 Druento (IT)
(74) Representative: Boggio, Luigi

(56) References cited:
- DE-U- 8 714 461
- FR-A- 2 413 239

## Description

The present invention relates to an aimable beam headlamp, particularly, but not exclusively, for a motor vehicle.

Road vehicles, particularly motor vehicles, are known to be fitted with headlamps designed to enable beam angle adjustment in a substantially vertical plane and as a function of load.

Known aimable beam headlamps usually comprise a cup-shaped outer casing designed to fit on to the vehicle body, and closed at the front by a transparent screen. Said casing usually houses a parabolic reflector at whose focus is mounted a light source, and whose position in relation to the casing is adjustable externally. On one side, the reflector is usually connected to the casing by means of connecting devices defining a cylindrical hinge with a substantially horizontal axis, and, on the other, by means of an aiming device fitted to the casing and connected to the reflector for adjusting its position about said horizontal axis and in relation to a basic operating position.

Certain known aiming devices feature an electromechanical linear actuator controllable externally and comprising an output rod designed to move axially in a direction perpendicular to the axis of said cylindrical hinge. Said rod penetrates inside the casing, and is connected to the reflector by means of an articulated joint comprising two, usually spherical, joints, at least one of which must be easily releasable to enable detachment of the actuator from the headlamp and casing for maintenance or replacement.

To prevent inadvertent release of said releasable joint, this is provided with a lock device which may be switched from a service lock position to an idle position enabling troublefree removal of the actuator. On known aiming devices of the aforementioned type, said lock device must be activated from inside the headlamp casing.

In most cases, the above operation, which usually requires the use of a tool, may be performed fairly easily in the case of detached headlamps, but is normally difficult, if not impossible, owing to the limited amount of space available, when the headlamp is mounted on the vehicle.

The aim of the present invention is to provide a headlamp featuring a power-operated reflector aiming device, wherein the actuator of said aiming device may be removed quickly, easily and cheaply under any conditions, and in particular when the headlamp is mounted on the vehicle.

With this aim in view, according to the present invention, there is provided an aimable beam headlamp as defined in claim 1.

A number of non-limiting embodiments of the present invention will be described with reference to the accompanying drawings, in which:
Fig.1 shows a schematic, partial axial section of a preferred embodiment of the headlamp according to the present invention;
Fig.2 shows a larger-scale front view of a first detail in Fig.1;
Fig.3 shows a rear view of the Fig.2 detail;
Fig.4 shows a bottom plan view of the Fig.2 detail;
Fig.5 shows a section along line V-V in Fig.2;
Fig.6 shows the same section as in fig.5, but with the fig.2 detail in a different operating position.

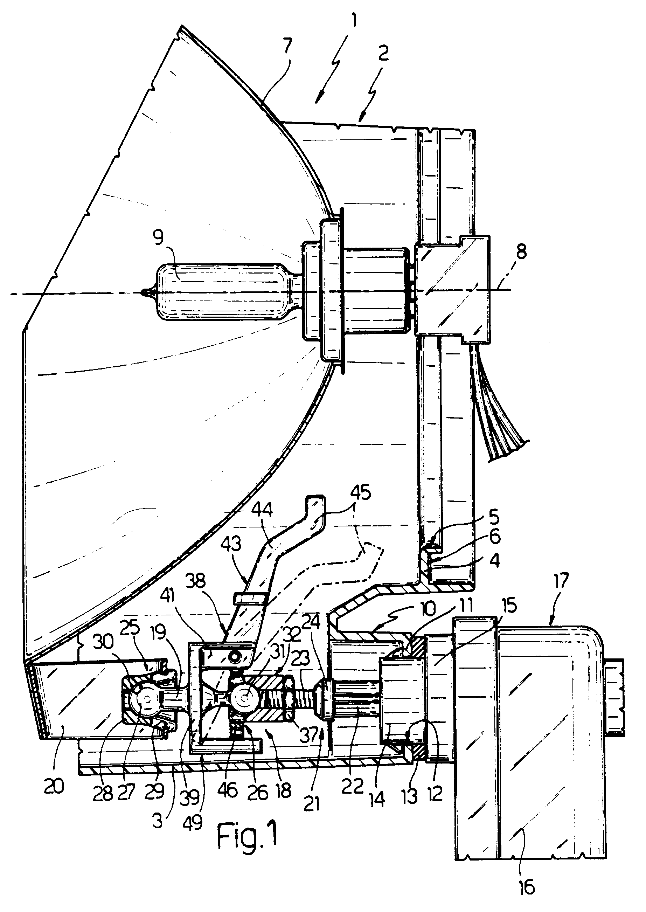

Number 1 in Fig.1 indicates an aimable beam headlamp comprising a cup-shaped outer casing 2 having a front opening (not shown) closed by a transparent screen (not shown).

Casing 2 comprises a lateral wall 3 closed rearwards by an end wall 4 having a central hole 5 with a peripheral channel 6 for receiving the edge (not shown) of a removable cap (not shown).

Casing 2 houses a parabolic reflector 7 having an optical axis 8 and a light source 9 at its focus.

At the top (not shown), reflector 7 is connected to casing 2 by means of a cylindrical hinge (not shown) having a substantially horizontal axis perpendicular to optical axis 8, and about which reflector 7 is designed to rotate in relation to casing 2, for moving the beam emitted by reflector 7 in a vertical plane.

A bottom portion of wall 4 is defined by a tubular appendix 10 extending parallel to axis 8 and adjacent to a rear portion of wall 3. Appendix 10 is closed rearwards by an end wall 11 having a central through hole 12 inside which is fitted, in fluidtight manner via the interposition of a seal 13, a tubular end appendix 14 of a tubular output element 15 of casing 16 of an electromechanical linear actuator 17.

Actuator 17 constitutes the actuating member of a powered aiming device, indicated as a whole by 18, for regulating the position of reflector 7 in relation to casing 2 about the axis of said horizontal cylindrical hinge (not shown) and to and from the basic operating position shown in Fig.1.

As shown in Fig.1, in addition to actuator 17, aiming device 18 also comprises an articulated rod 19 located between the end of an arm 20 integral with the rear surface of reflector 7 and extending towards end wall 4 in a direction substantially coaxial with appendix 10, and the free end of an axially-mobile output member 21 of actuator 17.

Said output member 21 comprises an output rod 22 of actuator 17, coaxial with and moving reciprocatingly along appendix 10; and a screw 23 mounted coaxial with rod 22 on the free end of rod 22 and adjusted axially by means of a nut 24.

Rod 19 is connected, at a first end, to the free end of arm 20 by means of a first spherical joint 25, and, at a second end, to the free end of screw 23 by means of a second spherical joint 26.

Spherical joint 25 comprises a sphere or spherical head 27 integral with rod 19, and a socket element 28 fitted through a hole 29 on the end of arm 20 and defining a spherical seat 30 for stably housing sphere 27 when socket element 28 is fitted through hole 29.

Spherical joint 26 comprises a sphere or spherical head 31 integral with rod 19, and a socket element 32 defining a spherical seat 33 for sphere 31 and connected to screw 23. As shown, particularly in Fig.s 5 and 6, socket element 32 comprises a circular base 34 from the periphery of which there extend axially a number of shaped elastic petals 35 defining spherical seat 33. Base 34 presents a threaded axial through hole 36 engaged by an adjustably long portion of screw 23 by means of nut 37.

Spherical joint 26 is a releasable joint enabling sphere 31 to be pulled out of seat 33 by simply deforming petals 35 elastically, and presents a lock device 38 on rod 19.

As shown, particularly in Fig.s 2 to 6, device 38 comprises a circular flange 39 integral with an intermediate point on rod 19 and having a radial peripheral slot 40. A peripheral portion of flange 39, diametrically opposite slot 40, is fitted with a fork 41 extending parallel with rod 19 towards sphere 31, and supporting a transverse pin 42 facing an end portion of petals 35.

Pin 42 constitutes the fulcrum of a rocker arm 43 comprising a first arm 44 consisting of a lever extending outwards of rod 19 and having an end portion 45 substantially facing hole 5 and readily accessible from outside through said hole 5; and a second arm consisting of a ring 46 fitted through with rod 19 and having an inside diameter substantially equal to the outside diameter of socket element 32 in the undeformed position.

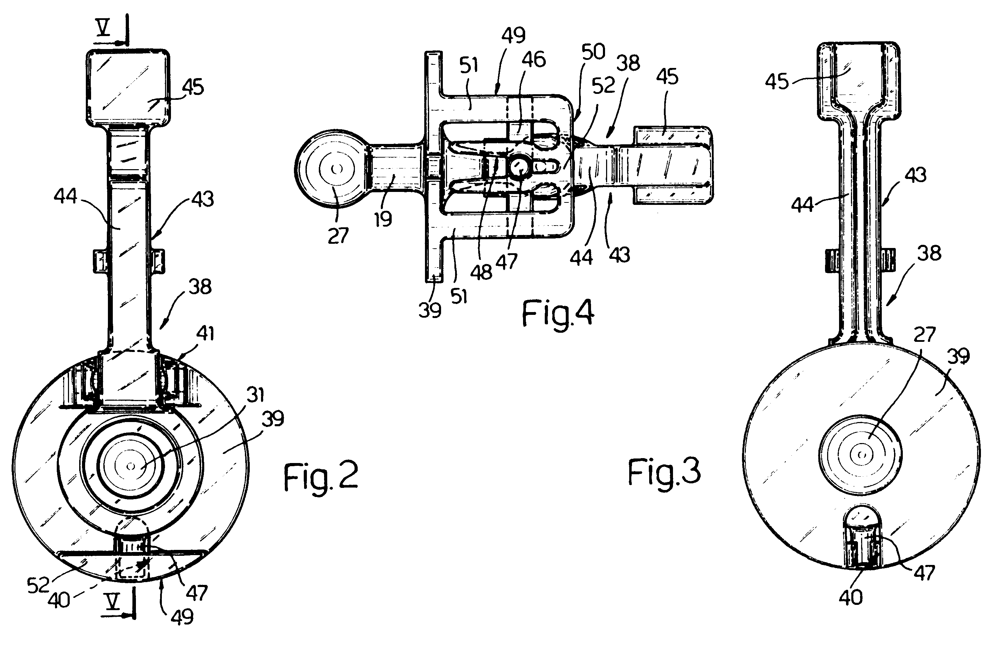

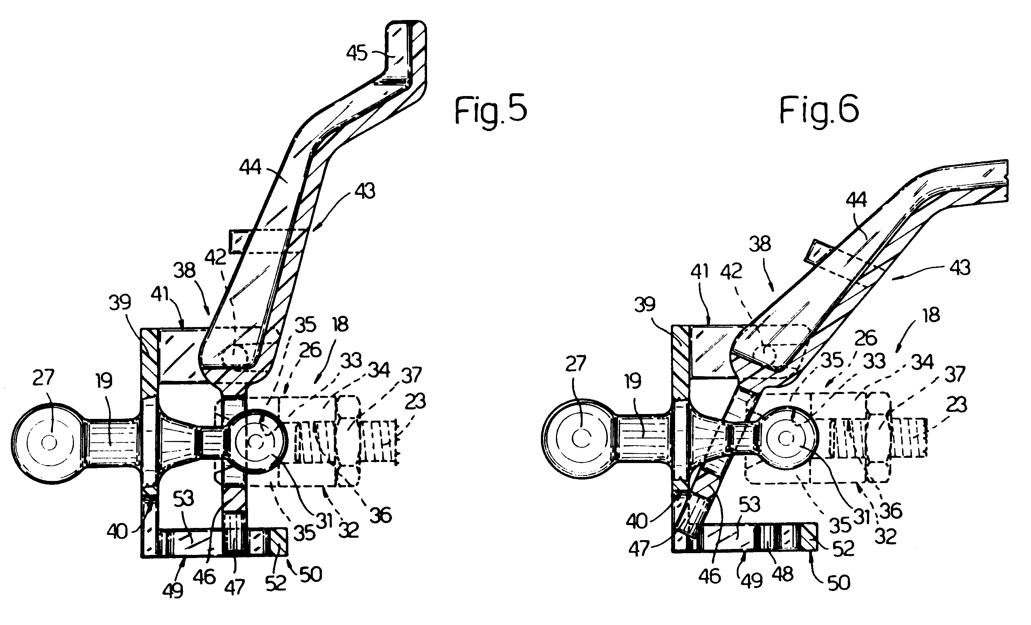

On the side diametrically opposite that connected to arm 44, ring 46 presents a radial appendix 47 which, as shown in Fig.s 5 and 6, may be moved, by acting manually on end portion 45, between an open position (Fig.6) wherein ring 46 is inclined in relation to rod 19 between the free end of petals 35 and flange 39, and appendix 47 engages slot 40, and a lock position (Fig.5) wherein ring 46 is substantially perpendicular to rod 19 and fits on to the end portion of petals 35 for preventing outward elastic deformation of the same, and appendix 47 engages an elastic seat 48 (Fig.4) formed in a stop device 49 on flange 39.

As shown, particularly in Fig.4, stop device 49 comprises a substantially U-shaped bracket 50 in turn comprising two arms 51 extending parallel to rod 19 from respective points on the outer periphery of flange 39 on opposite sides of slot 40. At the end opposite that integral with flange 39, arms 51 are connected to each other by a cross member 52, from an intermediate point on which there extend, towards flange 39, two elastic blades 53 parallel to each other and to rod 19, and defining seat 48.

From the foregoing description, it follows therefore that manual activation of rocker arm 43, which may be effected through hole 5 without the assistance of a tool and even when headlamp 1 is mounted on the vehicle, provides for troublefree, low-cost removal of ring 46 from socket element 32, and subsequent troublefree removal of actuator 17, which may be reconnected to rod 19 by fitting tubular appendix 14 inside hole 12 and moving rocker arm 43 from the release position shown in Fig.6 to the lock position shown in Fig.5, wherein accidental release of ring 46 from socket element 32 is prevented by stop device 49.

## Claims

1. An aimable beam headlamp (1) comprising a casing (2); a reflector (7) housed inside said casing (2) so as to rotate in relation to the same; and an aiming device (18) fitted to said casing (2) for regulating the position of said reflector (7) in relation to the same; said aiming device (18) comprising a linear actuator (17) having an output member (21) housed inside said casing (2) and moving axially to and from said reflector (7); releasable joint means (26) located between said output member (21) and said reflector (7); and releasable locking means (38) connected to said releasable joint means (26) for preventing accidental release of the same; characterised by the fact that said joint means (26) comprise a spherical joint in turn comprising a sphere (31) and a socket element (32) having a number of elastically deformable petals (35) defining a seat (33) for said sphere (31); said locking means (38) being connected to said sphere (31), and comprising a ring (46) designed to receive said socket element (32) and moving in relation to said sphere (31) between two positions wherein said petals (35) are respectively locked and released, and lever means (44) accessible from outside said casing (2), for moving said ring (46) between said two positions.

2. A headlamp as claimed in Claim 1, characterised by the fact that said ring (46) and said lever means (44) constitute the arms of a rocker arm (43); said locking means (38) comprising a fork (41) connected to said sphere (31) and supporting said rocker arm (43) for rotation between said lock and said release positions.

3. A headlamp as claimed in Claim 1 or 2, characterised by the fact that said locking means (38) comprise a stop device (49) connected to said sphere (31) and engaged by said ring (46) in the lock position.

4. A headlamp as claimed in Claim 3, characterised by the fact that said stop device (49) comprises a radial appendix (47) on said ring (46), and an elastic seat (48) connected to said sphere (31) and engaged by said appendix (47).

5. A headlamp as claimed in any one of the foregoing Claims, characterised by the fact that said locking means (38) comprise an articulated rod (19) fitted on one end with said sphere (31).

6. A headlamp as claimed in Claim 5 dependent on Claim 2, characterised by the fact that said fork (41) is connected integral with said articulated rod (19).

7. A headlamp as claimed in Claim 5 dependent on Claim 3 or 4, characterised by the fact that said stop device (49) is connected integral with said articulated rod (19).

## Patentansprüche

1. Ein Richtstrahlscheinwerfer (1), umfassend ein Gehäuse (2), einen innerhalb des Gehäuses (2) untergebrachten Reflektor (7) derart, daß er relativ zu dem letzteren drehbar ist, und eine Richteinrichtung (18), die an dem Gehäuse (2) befestigt ist für die Regulierung der Position des Reflektors (7) relativ zu dem letzteren, welche Richteinrichtung (18) einen Linearaktuator (17) umfaßt mit einem Ausgangsglied (21), das sich innerhalb des Gehäuses (2) befindet und axial zu und von dem Reflektor (7) beweglich ist, lösbare Verbindungsmittel (26), die zwischen dem Ausgangsglied (21) und dem Reflektor (7) angeordnet sind, und entriegelbare Verriegelungsmittel (38), die mit dem lösbaren Verbindungsmittel (26) verbunden sind für das Verhindern eines unbeabsichtigten Lösens desselben, **dadurch gekennzeichnet**, daß das Verbindungsmittel (26) ein Kugelgelenk umfaßt, das seinerseits eine Kugel (31) und ein Sockelelement (32) mit einer Anzahl elastisch deformierbarer Laschen (35) umfaßt, welche einen Sitz (33) für die Kugel (31) bilden, und daß das Verriegelungsmittel (38) mit der Kugel (31) verbunden ist und einen Ring (46) umfaßt, konstruiert zum Aufnehmen des Sockelelements (32) und beweglich relativ zu der Kugel (31) zwischen zwei Positionen, in denen die Laschen (35) verriegelt bzw. entriegelt sind, und mit Hebelmitteln (44), die von außerhalb des Gehäuses (2) zugänglich sind für das Bewegen des Ringes (46) zwischen den beiden Positionen.

2. Ein Scheinwerfer nach Anspruch 1, dadurch gekennzeichnet, daß der Ring (46) und das Hebelmittel (44) die Arme eines Kipparms (43) bilden, daß das Verriegelungsmittel (38) eine Gabel (41) umfaßt, die mit der Kugel (31) verbunden ist und den Kipparm (43) für die Drehung zwischen der Verriegelungs- und der Entriegelungsposition abstützt.

3. Ein Scheinwerfer nach Anspruch 1 oder 2, dadurch gekennzeichnet, daß das Verriegelungsmittel (38) eine Anschlageinrichtung (49) umfaßt, die mit der Kugel (31) verbunden ist und von dem Ring (46) in der Verriegelungsposition erfaßt wird.

4. Ein Scheinwerfer nach Anspruch 3, dadurch gekennzeichnet, daß die Anschlageinrichtung (49) einen radialen Fortsatz (47) an dem Ring (46) umfaßt sowie einen elastischen Sitz (48), der mit der Kugel (31) verbunden ist und in den der Fortsatz (47) eingreift.

5. Ein Scheinwerfer nach einem der vorangehenden Ansprüche, dadurch gekennzeichnet, daß das Verriegelungsmittel (38) eine Gelenkachse (19) umfaßt, die an einem Ende mit der Kugel (31) verbunden ist.

6. Ein Scheinwerfer nach Anspruch 5, soweit von Anspruch 2 abhängig, dadurch gekennzeichnet, daß die Gabel (41) einstückig mit der Gelenkachse (19) verbunden ist.

7. Ein Scheinwerfer nach Anspruch 5, soweit von Anspruch 3 oder 4 abhängig, dadurch gekennzeichnet, daß die Anschlageinrichtung (49) einstückig mit der Gelenkachse (19) verbunden ist.

## Revendications

1. Un phare à faisceau réglable (1) comprenant un boitier (2); un réflecteur (7) logé à l'intérieur du boitier (2) de manière à tourner par rapport à celui-ci; et un dispositif de réglage (18) monté sur ledit boitier (2), pour régler la position dudit réflecteur (7) par rapport à celui-ci; ledit dispositif de réglage (18) comprenant un dispositif d'actionnement linéaire (17) pourvu d'un élément de sortie (21) logé à l'intérieur dudit boitier (2) et mobile axialement vers ledit réflecteur (7) et à partir de celui-ci; des moyens en forme de joint pouvant être ôtés (26) situés entre ledit élément de sortie (21) et ledit réflecteur (7); et des moyens de blocage pouvant être ôtés (38) réunis auxdits moyens pouvant être ôtés (26) pour prévenir le dégagement accidentel de ces derniers; caractérisé en ce que lesdits moyens en forme de joint (26) comprennent un joint sphérique, composé d'une sphère (31) et d'un élément formant embase (32) comprenant une pluralité de pétales élastiques déformables (35), définissant un siège (33) pour ladite sphère (31); lesdits moyens de verrouillage (38) étant reliés à ladite sphère (31), et comprenant une bague (46) agencée pour recevoir ledit élément formant embase (32) et se déplaçant par rapport à ladite sphère (31), entre deux positions, dans lesquelles lesdits pétales (35) sont, respectivement, bloqués et dégagés, et des moyens formant levier (44), accessibles à partir de l'extérieur dudit boîtier (2), pour déplacer ladite bague (46) entre lesdites deux positions.

2. Un phare selon la revendication 1, caractérisé en ce que ladite bague (46) et lesdits moyens formant levier (44) constituent les bras d'un élément formant bas-leur (43); lesdits moyens de verrouillage (38) comprenant une fourchette (41) reliée à ladite sphère (31) et supportant ledit basculeur (43) à rotation entre lesdites positions de verrouillage et de dégagement.

3. Un phare selon la revendication 1 ou 2, caractérisé en ce que lesdits moyens de verrouillage (38) comprennent un dispositif d'arrêt (49) relié à ladite sphère (31) et en contact avec ladite bague (46) en position de verrouillage.

4. Un phare selon la revendication 3, caractérisé en ce que ledit dispositif d'arrêt (49) comprend un appendice radial (47) sur ladite bague (46), et un siège élastique (48) relié à ladite sphère (31) et en contact avec ledit appendice (47).

5. Un phare selon l'une quelconque des précédentes revendications, caractérisé en ce que lesdits moyens de verrouillage (38) comprennent une tige articulée (19) montée sur une extrémité de ladite sphère (31).

6. Un phare selon la revendication 5 dépendante de la revendication 2, caractérisé en ce que ladite fourchette (41) est fixée d'un seul tenant sur ladite tige articulée (19).

7. Un phare selon la revendication 5 dépendante de la revendication 3 ou 4, caractérisé en ce que ledit dispositif d'arrêt (49) est fixé d'un seul tenant sur ladite tige articulée (19).
